# EUROPÄISCHE PATENTSCHRIFT

(11) **EP 2 340 420 B1**
(45) Veröffentlichungstag und Bekanntmachung des Hinweises auf die Patenterteilung: **14.08.2013**
(21) Anmeldenummer: 09740305.9
(22) Anmeldetag: 19.10.2009
(51) Int. Cl.: G01F 23/284, G01F 23/26, G01F 23/296

(54) **FÜLLSTANDSMESSGERÄT**
FILL-LEVEL MEASURING DEVICE
APPAREIL DE MESURE DU NIVEAU DE REMPLISSAGE

(30) Priorität: 29.10.2008 DE 102008043252
(43) Veröffentlichungstag der Anmeldung: 06.07.2011
(73) Patentinhaber: Endress+Hauser GmbH+Co. KG, 79689 Maulburg (DE)
(72) Erfinder: OßWALD, Dirk, 79650 Schopfheim (DE); REIMELT, Ralf, 79110 Freiburg (DE)
(74) Vertreter: Andres, Angelika Maria
(86) Internationale Anmeldenummer: PCT/EP2009/063629
(87) Internationale Veröffentlichungsnummer: WO 2010/049297

(56) Entgegenhaltungen:
- GB-A- 2 059 596
- US-A- 2 375 084
- US-A- 3 433 072
- US-A- 3 477 290
- US-A- 6 118 282
- US-A1- 2003 201 842
- US-A1- 2005 285 608

## Beschreibung

Die Erfindung betrifft ein Füllstandsmessgerät zur Messung eines Füllstandes eines in einem Behälter befindlichen Füllguts, das eine vollständig isolierte in den Behälter eingeführte Messsonde aufweist.

Füllstandsmessungen dieser Art werden in weiten Bereichen der industriellen Messtechnik zur Füllstandsmessung von in Behältern befindlichen Füllgütern eingesetzt.

Es sind zwei unterschiedliche Messprinzipien bekannt, die es erlauben mittels einer in den Behälter eingeführten Messsonde den Füllstand zu messen.

Ein erstes Messprinzip basiert auf einer Laufzeitmessung. Dabei erzeugt das Füllstandsmessgerät elektromagnetische Signale, die es entlang der in diesem Fall als Wellenleiter dienenden Messsonde in den Behälter sendet. Ein Anteil dieser elektromagnetischen Signale wird an der Füllgutoberfläche des Füllguts zurück reflektiert, und dessen Echosignal nach einer vom Füllstand abhängigen Laufzeit wieder empfangen. Das Füllstandsmessgerät bestimmt die Laufzeit, die zwischen dem Aussenden des Signals und dem Empfang des durch die Reflektion an der Füllgutoberfläche entstandenen Echosignals vergeht. Die Bestimmung dieser Laufzeiten erfolgt anhand von bekannten Laufzeit-Messmethoden. In Verbindung mit geführten elektromagnetischen Signalen wird beispielsweise die Zeitbereichsreflektometrie (Time Domain Reflection) verwendet. Dabei wird beispielsweise nach der Methode der geführten Mikrowelle, ein Hochfrequenzimpuls entlang eines Sommerfeldschen Wellenleiters, eines Goubauschen Wellenleiters oder eines Koaxialwellenleiters ausgesendet. Trifft dieses elektromagnetische Signal auf eine Füllgutoberfläche im Behälter, so wird zumindest ein Teil des Signals aufgrund des an dieser Mediengrenze bestehenden Impedanzsprunges zurückreflektiert. Die empfangene Signalamplitude als Funktion der Zeit stellt das Echosignal dar. Jeder Wert dieses Echosignals entspricht der Amplitude eines in einem bestimmten Abstand vom Sende- und Empfangselement reflektierten Echos. Die Echosignale weisen ausgeprägte Maxima auf, die den jeweils an der Füllgutoberfläche reflektierten Anteilen der elektromagnetischen Signale entsprechen. Aus der Zeitdifferenz zwischen dem Aussenden des elektromagnetischen Signals und dem Empfang der Maxima wird die gesuchte Laufzeit ermittelt.

Anhand der baulichen Abmessungen der Messanordnung, insb. der Einbauhöhe des Füllstandmessgeräts im Bezug zu dem Behälter, und der Ausbreitungsgeschwindigkeiten der elektromagnetischen Signale in einem oberhalb des oberen Füllguts befindlichen Medium, z.B. Luft, ergibt sich aus der Laufzeit die Füllhöhe des Füllguts im Behälter und damit der im Behälter vorliegende Füllstand.

Ein zweites Messprinzip beruht auf einer Kapazitätsmessung. In diesem Fall dient die Messsonde als kapazitive Sonde, bzw. als Elektrode. Sie wird in den Behälter eingeführt und eine Kapazität eines durch die Sonde und die diese umgebende Behälterwand gebildeten Kondensators gemessen. Die gemessene Kapazität entspricht der Summe aus einer Grundkapazität des leeren Behälters, dem Produkt aus einem füllgutspezifischen Kapazitätszunahmefaktor des Füllguts und dessen Füllhöhe.

Es sind klassische Füllstandsmessgeräte zur Messung eines Füllstandes eines in einem Behälter enthaltenen Füllguts bekannt, bei denen das Laufzeitmessprinzip mit dem kapazitiven Messprinzip in einem Messgerät kombiniert wird. Ein Beispiel hierzu ist die in der DE 100 37 715 A1 der Anmelderin beschriebene Vorrichtung zur Messung eines Füllstandes eines einzigen in einem Behälter enthaltenen Füllguts. Die Vorrichtung umfasst eine Sonde, die wahlweise als kapazitive Sonde eines klassischen kapazitiven Füllstandsmessgeräts als auch als Wellenleiter eines nach dem Laufzeitprinzip arbeitenden klassischen Füllstandsmessgeräts betrieben werden kann.

Ein weiteres Beispiel ist in der DE-A1 195 10 484 beschrieben. Diese Anmeldung beschreibt ein nach dem Laufzeitprinzip arbeitendes Füllstandsmessgerät mit einem Wellenleiter, bei dem in dem Wellenleiter ein metallischer Innenleiter vorgesehen ist, der als kapazitive Sonde dient.

Vorzugsweise werden sowohl für die kapazitive Füllstandsmessung als auch für die Füllstandsmessung nach dem Laufzeitprinzip so genannte koaxiale Sonden als Messsonden eingesetzt, wie in Dokument US 2005285608 beschrieben. Diese umfassen einen Innenleiter und einen den Innenleiter koaxial umgebenden Schirmleiter. Koaxiale Sonden bieten den Vorteil, dass die damit ausgeführten Messungen vollständig unabhängig von der Einbausituation der Messsonde im Behälter erfolgen. Insb. haben Form und elektrische Eigenschaften des Behälters keinerlei Einfluss auf die Messung mehr. Gleichzeitig wird durch den Schirmleiter ein Maximum an Signalqualität erreicht. Einflüsse durch äußere Störungen und Verlustleistungen werden hierdurch erheblich reduziert.

Um eine solche koaxiale Sonde für eine kapazitive Füllstandsmessung und/oder eine Füllstandsmessung nach dem oben beschriebenen Laufzeitprinzip einsetzen zu können, ist es zwingend erforderlich, dass der Innenleiter gegenüber dem Schirmleiter galvanisch isoliert ist. D. h. es darf auch bei einem Einsatz in einem mit einem elektrisch leitfähigen Füllgut gefüllten Behälter keine galvanische Verbindung zwischen dem Innenleiter und dem Schirmleiter entstehen. Eine solche galvanische Verbindung würde zu einem Kurzschluss führen, der sowohl die kapazitive Füllstandsmessung als auch die Füllstandsmessung nach dem Laufzeitprinzip unmöglich macht.

Gleichzeitig muss gewährleistet sein, dass der Schirmleiter elektrisch auf einem Bezugspotential, vorzugsweise auf Masse, liegt. Das Bezugspotential bildet für die kapazitive Füllstandsmessung ein Referenzpotential, gegenüber dem die Kapazitätsmessung vorgenommen wird. Würde der Schirmleiter nicht auf dem Bezugspotential liegen, so würde durch den Innenleiter und den Schirmleiter im Behälter im Rahmen der kapazitive Füllstandsmessung eine isolierte Kapazität gebildet, die insb. in Anwendungen, in denen besondere Explosionsschutzvorkehrungen getroffen werden müssen, aus Sicherheitsgründen nicht zulässig ist.

Auch bei der Füllstandsmessung nach dem Laufzeitprinzip liegt der Schirmleiter vorzugsweise auf einem Bezugspotential, vorzugsweise auf Masse. Wäre dies nicht gegeben, so können im Bereich der Einkopplung des elektromagnetischen Signals in die koaxiale Sonde Impedanzsprünge vorliegen, die zu einer starken Eingangsreflexion der elektromagnetischen Signale in diesem Bereich führen. Diese ungewünschten Eingangsreflexionen führen zu einer deutlich höheren Verlustleistung.

Es ist eine Aufgabe der Erfindung ein Füllstandsmessgerät mit einer koaxialen Messsonde anzugeben, bei dem der Innenleiter der Messsonde galvanisch gegenüber dem Schirmleiter isoliert ist und der Schirmleiter elektrisch auf einem Bezugspotential liegt.

Hierzu besteht die Erfindung in einem Füllstandsmessgerät zur kapazitiven Füllstandsmessung und/oder zur Füllstandsmessung nach dem Laufzeitprinzip eines Füllgutes in einem Behälter, mit
- einer elektrisch auf einem Bezugspotential liegenden Befestigungsvorrichtung zur Befestigung des Messgeräts auf einer mit einem der Befestigungsvorrichtung entsprechenden Gegenstück ausgestatteten Behälteröffnung,
- einer im Messbetrieb zwischen der Befestigungsvorrichtung und dem Gegenstück eingespannten Ringscheibe aus einem elektrisch leitfähigen Material,
- einem vollständig von einer Isolationsschicht umgebenen Innenleiter der im Messbetrieb durch die Ringscheibe hindurch in den Behälter hinein geführt ist,
- einem an die Isolationsschicht anschließenden den Innenleiter koaxial umgebenden Isolationskörper,
- der einen ringscheibenförmigen zwischen der Befestigungsvorrichtung und der Ringscheibe eingespannten Abschnitt aufweist,
- einem Schirmleiter, der den Innenleiter koaxial umgibt und mechanisch und elektrisch leitend mit der Ringscheibe verbunden ist, und
- mindestens einem in der Ringscheibe außerhalb eines von dem Isolationskörper überdeckten Bereichs derselben auf einem Federelement fixierten elektrischen Kontaktelement, durch das der Schirmleiter über das Kontaktelement und die Ringscheibe elektrisch leitend an die Befestigungsvorrichtung angeschlossen ist.

Gemäß einer bevorzugten Weiterbildung weist der Isolationskörper einen von dem ringscheibenförmigen zwischen der Befestigungsvorrichtung und der Ringscheibe eingespannten Abschnitt endseitig umschlossenen hohlzylindrischen Abschnitt auf, der einen hohlzylindrischen Hohlraum zwischen dem Innenleiter und der Ringscheibe auf deren der Befestigungsvorrichtung zugewandten Seite endseitig vollständig ausfüllt.

Gemäß einer weiteren Weiterbildung weist der Isolationskörper einen konisch in von der Befestigungsvorrichtung abgewandter Richtung sich auf den Außendurchmesser des isolierten Innenleiters verjüngenden Abschnitt auf.

Gemäß einer weiteren Weiterbildung sind die Federelemente jeweils in einer in der Ringscheibe vorgesehenen Sacklochbohrung angeordnet, und das jeweilige Federelement presst das zugehörige Kontaktelement im montierten Zustand gegen das Befestigungselement.

Gemäß einer bevorzugten Ausgestaltung sind die Kontaktelemente metallische Kugeln, die auf dem jeweiligen Federelement fixiert sind.

Gemäß einer weiteren bevorzugten Ausgestaltung ist die Befestigungsvorrichtung an Masse angeschlossen ist.

Gemäß einer weiteren Ausgestaltung besteht der Isolationskörper aus Polytetrafluorethylen (PTFE).

Gemäß einer weiteren Weiterbildung ist der Schirmleiter auf ein in die Ringscheibe eingesetztes elektrisch leitfähiges Anschlussstück aufgeschraubt, das insb. bündig in die Ringscheibe eingeschraubt ist.

Das erfindungsgemäße Füllstandsmessgerät weist den Vorteil auf, dass es sowohl zur kapazitiven Füllstandsmessung als auch zur Füllstandsmessung nach dem Laufzeitprinzip geeignet ist.

Ein weiterer Vorteil des erfindungsgemäßen Füllstandsmessgeräts besteht darin, dass es in einem weiten Temperaturbereich einsetzbar ist, da durch die Federelemente auch dann ein zuverlässiger elektrischer Anschluss des Schirmleiters gegeben ist, wenn sich der Abstand zwischen der Ringscheibe und der Befestigungsvorrichtung aufgrund der thermischen Ausdehnung des Isolationskörpers ändert.

Die Erfindung und deren Vorteile werden nun anhand der Figuren der Zeichnung, in denen ein Ausführungsbeispiel dargestellt ist, näher erläutert; gleiche Teile sind in den Figuren mit gleichen Bezugszeichen versehen.
- Fig. 1 zeigt:: eine teilweise geschnittene Ansicht eines erfindungsgemäßen Füllstandsmessgeräts;
- Fig. 2 zeigt:: den Isolationskörper von Fig. 1; und
- Fig. 3 zeigt:: ein in einer Sacklochbohrung in der Ringscheibe von Fig. 1 auf einem Federelement fixiertes Kontaktelement.

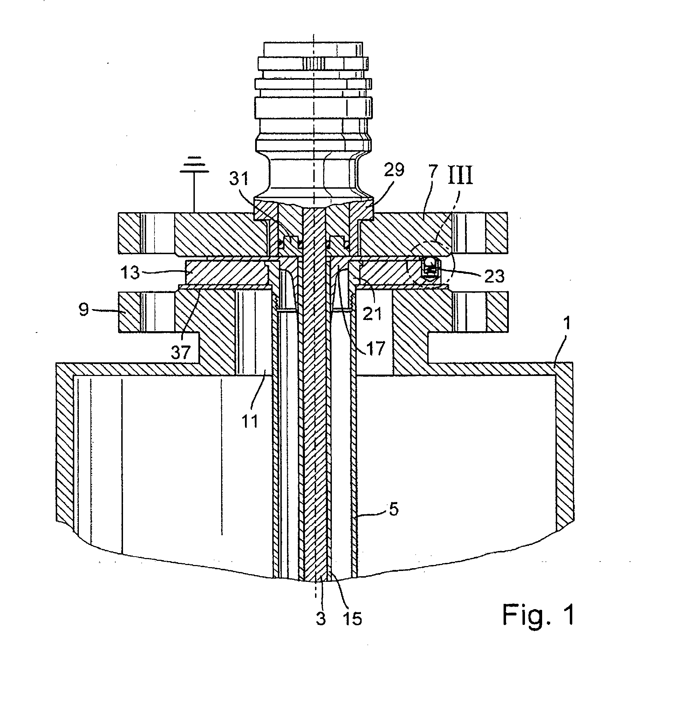

Fig. 1 zeigt eine teilweise geschnittene Ansicht eines erfindungsgemäßen Füllstandsmessgeräts. Das Füllstandsmessgerät dient zur kapazitiven Füllstandsmessung und/oder zur Füllstandsmessung nach dem Laufzeitprinzip eines Füllgutes in einem Behälter 1. Hierzu weist das Füllstandsmessgerät eine koaxiale Messsonde auf, die einen Innenleiter 3 und einen den Innenleiter 3 koaxial umgebenden Schirmleiter 5 umfasst.

Das Füllstandsmessgerät weist eine Befestigungsvorrichtung 7 auf, mit der das Messgerät auf einer mit einem der Befestigungsvorrichtung 7 entsprechenden Gegenstück 9 ausgestatteten Behälteröffnung 11 montierbar ist. In dem dargestellten Ausführungsbeispiel ist die Befestigungsvorrichtung 7 ein Flansch und das Gegenstück 9 ein entsprechend geformter Gegenflansch. Selbstverständlich können hier auch andere dem Fachmann bekannte Befestigungsvorrichtungen und deren entsprechenden Gegenstücke eingesetzt werden. Im montierten Zustand führt die koaxiale Messsonde in den Behälter 1 hinein, und das Füllgut dringt, bis zu einer dem aktuellen Füllstand entsprechenden Füllhöhe in den vom Schirmleiter 5 umschlossenen Innenraum zwischen Schirmleiter 5 und Innenleiter 3 ein. Um den Füllgutfluss in den Innenraum und aus dem Innenraum heraus zu unterstützen, kann der Schirmleiter 5 über dessen Länge verteilt angeordnete Öffnungen aufweisen, durch die das Füllgut einfließen kann. Alternativ oder zusätzlich kann der Schirmleiter 5 eine im montierten Zustand oberhalb des höchsten zulässigen Füllstands vorgesehene Entlüftungsöffnung aufweisen.

In Verbindung mit einer kapazitiven Füllstandsmessung dient der Innenleiter 3 als Elektrode und der Schirmleiter 5 als Gegenelektrode. Elektrode und Gegenelektrode bilden einen Kondensator, dessen Kapazität von der Füllhöhe des Füllguts in dem vom Schirmleiter 5 umschlossenen Innenraum zwischen Schirmleiter 5 und Innenleiter 3 abhängig ist. Der Füllstand wird in diesem Fall anhand einer Messung dieser Kapazität bestimmt.

In Verbindung mit einer Füllstandsmessung nach dem Laufzeitprinzip dient der Innenleiter 3 als Wellenleiter, entlang dem elektromagnetische Signale in den Behälter gesendet und deren an der Füllgutoberfläche des in dem vom Schirmleiter 5 umschlossenen Innenraum befindlichen Füllguts reflektierten Echosignale nach einer vom Füllstand abhängigen Laufzeit wieder empfangen werden. Es wird die zugehörige Signallaufzeit gemessen und anhand der Signallaufzeit und der Ausbreitungsgeschwindigkeit der elektromagnetischen Signale entlang des Wellenleiters der Füllstand bestimmt. In diesem Fall dient der Schirmleiter 5 als Abschirmung gegenüber der Umgebung und bewirkt gleich bleibende Messbedingungen. Alternativ können Innenleiter 3 und Schirmleiter 5 zusammen als Koaxialleiter eingesetzt werden, in dem die elektromagnetischen Signale entsprechend geführt werden. Der Schirmleiter 5 bewirkt in beiden Fällen eine über die gesamte Länge der koaxialen Messsonde konstante Impedanz. Hierdurch wird eine hohe Signalqualität erzielt und die Verlustleistung extrem gering gehalten.

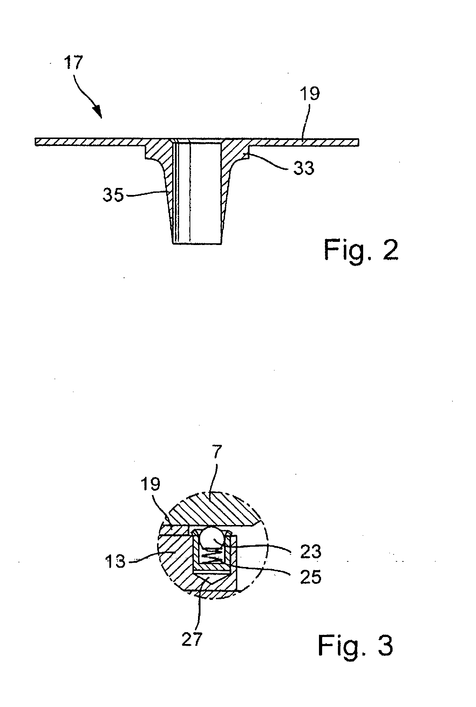

Erfindungsgemäß umfasst das Füllstandsmessgerät eine im montierten Zustand zwischen der Befestigungsvorrichtung 7 und dem Gegenstück 9 eingespannte Ringscheibe 13 aus einem elektrisch leitfähigen Material, vorzugsweise aus Metall. Der Innenleiter 3 ist vollständig von einer Isolationsschicht 15 umgebenen und durch die Ringscheibe 13 hindurch in den Behälter 1 hinein geführt. In die Ringscheibe 13 ist ein Isolationskörper 17 eingesetzt, der einen in der Ringscheibe 13 befindlichen Teilabschnitt des Innenleiters 3 koaxial umschließt, und unmittelbar an dessen Isolationsschicht 15 anschließt. Isolationsschicht 15 und Isolationskörper 17 bestehen aus einem isolierenden Material, z.B, aus Poytetrafluorethylen (PTFE). Fig. 2 zeigt ein Ausführungsbeispiel des Isolationskörpers 17 im Detail. Er weist endseitig einen ringscheibenförmigen sich radial nach außen erstreckenden Abschnitt 19 auf, der im montierten Zustand zwischen der Befestigungsvorrichtung 7 und der Ringscheibe 13 eingespannt ist.

Der Schirmleiter 5 besteht aus einem elektrisch leitfähigen Material, vorzugsweise aus Metall, und ist mechanisch und elektrisch leitend mit der ebenfalls elektrisch leitfähigen Ringscheibe 13 verbunden. Hierzu könnten Ringscheibe 13 und Schirmleiter 5 einteilig ausgebildet sein. Aus fertigungstechnischen Gründen ist es allerdings in der Regel von Vorteil, zwei getrennte Bauteile einzusetzen, die miteinander verbunden werden. In dem in Fig. 1 dargestellten Ausführungsbeispiel ist hierzu ein im Wesentlichen hohlzylindrisches Anschlussstück 21 aus einem elektrisch leitfähigen Material, vorzugsweise aus Metall, vorgesehen, über das die mechanische und die elektrische Verbindung zwischen der Ringscheibe 13 und dem Schirmleiter 5 erfolgt. Das Anschlussstück 21 ist hierzu in die Ringscheibe 13 eingeschraubt und schließt auf deren der Befestigungsvorrichtung 7 zugewandten Seite bündig mit der Ringscheibe 13 ab. Das gegenüberliegende Ende des Anschlussstücks 21 ragt aus der Ringscheibe 13 heraus in Richtung des Behälters 1 und weist ein Gewinde auf, auf das der mit einem entsprechenden Gegengewinde ausgestattete Schirmleiter 5 aufgeschraubt ist. Da sowohl die Ringscheibe 13, als auch das Anschlussstück 21 und der Schirmleiter 5 aus elektrisch leitfähigen Materialien bestehen bewirkt diese mechanische Verbindung gleichzeitig auch die gewünschte elektrische Verbindung. Ringscheibe 13 und Anschlussstück 21 können natürlich auch einteilig ausgebildet sein.

Erfindungsgemäß ist mindestens ein Kontaktelement 23 vorgesehen, dass eine elektrische leitfähige Verbindung zwischen der Befestigungsvorrichtung 9 und der Ringscheibe 13 bewirkt. Die Befestigungsvorrichtung 9 ist an ein vorgegebenen Bezugspotential, vorzugsweise an Masse, angeschlossen. Dies ist in der industriellen Messtechnik Standard. Messgerätgehäuse, sowie deren Befestigungsvorrichtungen sind üblicherweise geerdet. Entsprechend liegt der elektrisch leitend mit der Ringscheibe 13 verbundene Schirmleiter 5 über die Kontaktelemente 23 ebenfalls auf diesem Bezugspotential.
Die Kontaktelemente 23 sind auf einem äußeren Rand der Ringscheibe 13 außerhalb des von dem Isolationskörper 17 überdeckten Bereichs derselben angeordnet. In dem dargestellten Ausführungsbeispiel sind die Kontaktelemente 23 außerhalb des von dem ringscheibenförmigen Abschnitt 19 des Isolationskörpers 17 überdeckten Bereichs der Ringscheibe 13 angeordnet. Grundsätzlich genügt ein einziges Kontaktelement 23 um den elektrischen Kontakt herzustellen. Vorzugsweise werden jedoch drei oder mehr Kontaktelemente 23 eingesetzt, die gleichmäßig über den äußeren Rand der Ringscheibe 13 verteilt angeordnet sind. Die Kontaktelemente 23 sind jeweils auf einem Federelement 25 fixiert, das das jeweilige Kontaktelement 23 gegen die Befestigungsvorrichtung 7 presst.

Hierzu sind die Federelemente 25 jeweils, wie in Fig. 3 im Detail dargestellt, in in der Ringscheibe 13 für die Aufnahme der Federelemente 25 vorgesehene Sacklochbohrungen 27 eingesetzt. Die Kontaktelemente 23 sind in dem dargestellten Ausführungsbeispiel metallische Kugeln, die auf den Federelementen 25 fixiert sind.

Der Einsatz der Federelemente 25 weist den Vorteil auf, dass hierdurch auch dann noch ein zuverlässiger elektrischer Kontakt gewährleistet ist, wenn dass Füllstandsmessgerät wechselnden Umgebungstemperaturen ausgesetzt ist. Wechselnde Umgebungstemperaturen haben Schwankungen der Dicke des zwischen der Befestigungsvorrichtung 7 und der Ringscheibe 13 eingespannten kreisringscheibenförmigen Abschnitts 19 des Isolationskörpers 17 zur Folge, die über die Federelemente 25 aufgefangen werden. Die Federelemente 25 gewährleisten damit einen zuverlässigen elektrischen Kontakt über den der Schirmleiter 5 über die Ringscheibe 13 und die Kontaktelemente 23 elektrisch leitend an die Befestigungsvorrichtung 7 angeschlossen ist.

Gleichzeitig ist durch den Isolationskörper 17 zusammen mit der den Innenleiter 3 umschließenden Isolationsschicht 15 eine zuverlässige Isolierung des Innenleiters 3 gegeben, durch den dieser vollständig gegenüber den auf dem Bezugspotential liegenden Bauteilen: Schirmleiter 5, Ringscheibe 13, Anpassstück 21 und Befestigungsvorrichtung 7 galvanisch isoliert ist. Diese Isolation wird in dem an die koaxiale Messsonde anschließenden Anschlussstück 29 des Messgeräts durch entsprechende dort eingesetzte weitere Isolatoren 31 fortgesetzt.

Vorzugsweise weist der der Isolationskörper 17 einen von dem ringscheibenförmigen zwischen der Befestigungsvorrichtung 7 und der Ringscheibe 13 eingespannten Abschnitt 19 endseitig umschlossenen hohlzylindrischen Abschnitt 33 auf, der einen hohlzylindrischen Hohlraum zwischen dem Innenleiter 3 und der Ringscheibe 13 auf deren der Befestigungsvorrichtung 7 zugewandten Seite endseitig vollständig ausfüllt. Dieser Abschnitt 33 bewirkt neben der Isolation eine passgenaue Zentrierung und eine zusätzliche mechanische Fixierung des Isolationskörpers 17 in der Ringscheibe 13. Wird das in Fig. 1 dargestellte Anpassstück 21 in die Ringscheibe 13 eingesetzt, so füllt dieser Abschnitt 33 natürlich den entsprechenden hohlzylindrischen Hohlraum zwischen dem Innenleiter 3 und dem Anpassstück 21 auf deren der Befestigungsvorrichtung 7 zugewandten Seite endseitig vollständig aus.

Vorzugsweise weist der Isolationskörper 17 einen konisch in von der Befestigungsvorrichtung 7 abgewandter Richtung sich auf den Außendurchmesser des isolierten Innenleiters 3 verjüngenden Abschnitt 35 auf, dessen größter Durchmesser vorzugsweise gleich einem Innendurchmesser der Ringscheibe 13, des Anpassstücks 21 bzw. des Schirmleiters 5 ist. Dieser konische Abschnitt 35 bietet zum einen den Vorteil, dass in diesem Bereich eindringendes Füllgut leichter nach unten in den Behälter 1 hinein abfließen kann. Zum anderen bietet er im Hinblick auf die Füllstandsmessung nach dem Laufzeitprinzip einen für die elektromagnetischen Signale kontinuierlichen Übergang, in dem sich die Impedanz entlang der koaxialen Messsonde in diesem Einführungsbereich nur langsam und vor allem kontinuierlich und nicht sprunghaft ändert.

Zwischen der Ringscheibe 13 und dem Gegenstück 9 ist vorzugsweise eine Prozessdichtung 37 angeordnet. Da der elektrische Anschluss des Schirmleiters 5 über die Ringscheibe 13 und die auf dem Bezugspotential liegende Befestigungsvorrichtung 7 verläuft, ist an dieser Stelle keine elektrisch leitende Verbindung zwischen dem Behälter 1 bzw. dessen Gegenstück 9 und dem Schirmleiter 5 erforderlich.

### Bezugszeichenliste

- 1: Behälter
- 3: Innenleiter
- 5: Schirmleiter
- 7: Befestigungsvorrichtung
- 9: Gegenstück
- 11: Behälteröffnung
- 13: Ringscheibe
- 15: Isolationsschicht
- 17: Isolationskörper
- 19: ringscheibenförmiger Abschnitt des Isolationskörpers
- 21: Anschlussstück
- 23: Kontaktelement
- 25: Federelement
- 27: Sacklochbohrung
- 29: Anschlussstück
- 31: weitere Isolatoren
- 33: hohlzylindrischer Abschnitt des Isolationskörpers
- 35: konischer Abschnitt des Isolationskörpers
- 37: Prozessdichtung

## Patentansprüche

1. Füllstandsmessgerät zur kapazitiven Füllstandsmessung und/oder zur Füllstandsmessung nach dem Laufzeitprinzip eines Füllgutes in einem Behälter (1), mit
- einer elektrisch auf einem Bezugspotential liegenden Befestigungsvorrichtung (7) zur Befestigung des Messgeräts auf einer mit einem der Befestigungsvorrichtung (7) entsprechenden Gegenstück (9) ausgestatteten Behälteröffnung (11),
- einer im Messbetrieb zwischen der Befestigungsvorrichtung (7) und dem Gegenstück (9) eingespannten Ringscheibe (13) aus einem elektrisch leitfähigen Material,
- einem vollständig von einer Isolationsschicht (15) umgebenen Innenleiter (3) der im Messbetrieb durch die Ringscheibe (13) hindurch in den Behälter (1) hinein geführt ist,
- einem an die Isolationsschicht (15) anschließenden den Innenleiter (3) koaxial umgebenden Isolationskörper (17),
-- der einen ringscheibenförmigen zwischen der Befestigungsvorrichtung (7) und der Ringscheibe (13) eingespannten Abschnitt (19) aufweist,
- einem Schirmleiter (5), der den Innenleiter (3) koaxial umgibt und mechanisch und elektrisch leitend mit der Ringscheibe (13) verbunden ist, **gekennzeichnet durch**
- mindestens ein in der Ringscheibe (13) außerhalb eines von dem Isolationskörper (17) überdeckten Bereichs derselben auf einem Federelement (25) fixiertes elektrisches Kontaktelement (23), **durch** das der Schirmleiter (5) über das Kontaktelement (23) und die Ringscheibe (13) elektrisch leitend an die Befestigungsvorrichtung (7) angeschlossen ist.

2. Füllstandsmessgerät nach Anspruch 1, bei dem
der Isolationskörper (17) einen von dem ringscheibenförmigen zwischen der Befestigungsvorrichtung (7) und der Ringscheibe (13) eingespannten Abschnitt (19) endseitig umschlossenen hohlzylindrischen Abschnitt (33) aufweist, der einen hohlzylindrischen Hohlraum zwischen dem Innenleiters (3) und der Ringscheibe (13) auf deren der Befestigungsvorrichtung (7) zugewandten Seite endseitig vollständig ausfüllt.

3. Füllstandsmessgerät nach Anspruch 1, bei dem
der Isolationskörper (17) einen konisch in von der Befestigungsvorrichtung (7) abgewandter Richtung sich auf den Außendurchmesser des isolierten Innenleiters (3) verjüngenden Abschnitt (35) aufweist.

4. Füllstandsmessgerät nach Anspruch 1, bei dem
- die Federelemente (25) jeweils in einer in der Ringscheibe (13) vorgesehenen Sacklochbohrung (27) angeordnet sind, und
- das jeweilige Federelement (25) das zugehörige Kontaktelement (23) im montierten Zustand gegen das Befestigungselement (7) presst.

5. Füllstandsmessgerät nach Anspruch 1 oder 4, bei dem
die Kontaktelemente (23) metallische Kugeln sind, die auf dem jeweiligen Federelement (25) fixiert sind.

6. Füllstandsmessgerät nach Anspruch 1, bei dem
die Befestigungsvorrichtung (7) an Masse angeschlossen ist.

7. Füllstandsmessgerät nach Anspruch 1, bei dem
der Isolationskörper (17) aus Polytetrafluorethylen (PTFE) besteht.

8. Füllstandsmessgerät nach Anspruch 1, bei dem
der Schirmleiter (5) auf ein in die Ringscheibe (13) eingesetztes elektrisch leitfähiges Anschlussstück (21) aufgeschraubt ist.

9. Füllstandsmessgerät nach Anspruch 8, bei dem
das Anschlussstück (21) bündig in die Ringscheibe (13) eingeschraubt ist.

## Claims

1. Level transmitter designed for capacitance level measurement and/or for level measurement according to the time of flight principle of a product in a container (1) with
- a fastening unit (7) electrically located on a reference potential, said fastening unit (7) designed to secure the transmitter to a container opening (11) equipped with a counter-piece (9) that corresponds to the fastening unit (7),
- an annular disk (13) made from electrically conductive material and clamped during operation between the fastening unit (7) and the counter-piece (9),
- an internal conductor (3) which is surrounded entirely by an insulation layer (15), said conductor being guided through the annular disk (13) and into the container (1) during operation,
- an insulation body (17) that coaxially surrounds the internal conductor (3) and adjoins on the insulation layer (15),
-- said insulation body (17) having a section (19) in the form of an annular disk which is clamped between the fastening unit (7) and the annular disk (13),
- a shielded wire (5), which coaxially surrounds the internal conductor (3) and is connected to the annular disk (13) in a mechanical and electrically conductive manner, **characterized by**
- at least one electrical contact element (23) fixed on a spring element (25) located in the annular disk (13) outside an area covered by the insulation body (17), by means of said contact element the shielded wire (5) is connected in an electrically conductive manner to the fastening unit (7) via the contact element (23) and the annular disk (13).

2. Level transmitter as claimed in Claim 1, wherein the insulation body (17) has a hollow cylinder section (33) which is surrounded at the end by the section (19) which has the form of an annular disk and is clamped between the fastening unit (7) and the annular disk (13), said section (33) completely filling in, at the end, a hollow cylindrical cavity between the internal conductor (3) and the annular disk (13) at the side facing towards the fastening unit (7).

3. Level transmitter as claimed in Claim 1, wherein the insulation body (17) has a conical section (35) that tapers to the outer diameter of the insulating internal conductor (3) in the direction facing away from the fastening unit (7).

4. Level transmitter as claimed in Claim 1, wherein
- the spring elements (25) are each arranged in a blind bore (27) provided in the annular disk (13), and
- the spring element (25) presses the associated contact element (23) against the fastening unit (7) in a mounted state.

5. Level transmitter as claimed in claim 1 or 4, wherein the
contact elements (23) are metal balls that are fixed on the respective spring element (25).

6. Level transmitter as claimed in claim 1, wherein
the fastening unit (7) is connected to ground.

7. Level transmitter as claimed in claim 1, wherein
the insulation body (17) is made from polytetrafluoroethylene (PTFE).

8. Level transmitter as claimed in claim 1, wherein
the shielded wire (5) is screwed onto an electrically conductive adapter (21) which is inserted into the annular disk (13).

9. Level transmitter as claimed in claim 8, wherein the
adapter (21) is screwed into the annular disk (13) in a flush manner.

## Revendications

1. Transmetteur de niveau destiné à la mesure de niveau capacitive et/ou destiné à la mesure de niveau d'après le principe du temps de propagation d'un produit dans un réservoir (1) avec
- un dispositif de fixation (7) se trouvant à un potentiel de référence électrique, lequel dispositif est destiné à la fixation du transmetteur sur une ouverture de réservoir (11) équipée d'une contre-pièce (9) correspondant au dispositif de fixation (7),
- un disque annulaire (13) serré en mode de mesure entre le dispositif de fixation (7) et la contre-pièce (9), lequel disque est constitué d'un matériau électroconducteur,
- un conducteur intérieur (3) entièrement entouré d'une couche d'isolation (15), lequel conducteur est guidé en mode de mesure à travers le disque annulaire (13) à l'intérieur du réservoir (1),
- un corps d'isolation (17) entourant coaxialement le conducteur intérieur (3) jouxtant la couche d'isolation (15),
-- qui présente une section (19) en forme de disque annulaire, serrée entre le dispositif de fixation (7) et le disque annulaire (13),
- un conducteur de blindage (5), qui entoure coaxialement le conducteur intérieur (3) et est relié au moyen d'une liaison mécanique et électroconductrice avec le disque annulaire (13),
**caractérisé par**
- au moins un élément de contact (23) électrique fixé sur un élément à ressort, se trouvant dans le disque annulaire (13), en dehors d'une zone recouverte par le corps d'isolation (17), élément à ressort à travers lequel le conducteur de blindage (5) est raccordé de manière électroconductrice au dispositif de fixation (7) par l'intermédiaire de l'élément de contact (23) et le disque annulaire (13).

2. Transmetteur de niveau selon la revendication 1, pour lequel le corps d'isolation (17) présente une partie (33) cylindrique creuse entourée en son extrémité par une partie (19) en forme de disque annulaire, serrée entre le dispositif de fixation (7) et le disque annulaire (13), laquelle partie (33) remplit entièrement, en son extrémité, l'espace cylindrique creux entre le conducteur intérieur (3) et le disque annulaire (13), sur son côté faisant face au dispositif de fixation (7).

3. Transmetteur de niveau selon la revendication 1, pour lequel le corps d'isolation (17) présente une partie conique (35) dans la direction opposée au dispositif de fixation (7), partie dont le diamètre diminue jusqu'au diamètre extérieur du conducteur intérieur (3) isolé.

4. Transmetteur de niveau selon la revendication 1, pour lequel
- les éléments à ressort (25) sont disposés respectivement dans un alésage borgne (27) prévu dans le disque annulaire (13), et
- l'élément à ressort (25) respectif presse l'élément de contact (23) correspondant dans l'état monté contre l'élément de fixation (7).

5. Transmetteur de niveau selon la revendication 1 ou 4, pour lequel les éléments de contact (23) sont des billes métalliques, qui sont fixées sur l'élément à ressort (25) respectif.

6. Transmetteur de niveau selon la revendication 1, pour lequel le dispositif de fixation (7) est raccordé à la masse.

7. Transmetteur de niveau selon la revendication 1, pour lequel le corps d'isolation (17) est en polytétrafluoroéthylène (PTFE).

8. Transmetteur de niveau selon la revendication 1, pour lequel le conducteur de blindage (5) est vissé sur une pièce de raccordement (21) électroconductrice introduite dans le disque annulaire (13).

9. Transmetteur de niveau selon la revendication 8, pour lequel la pièce de raccordement (21) est vissée de façon affleurante dans le disque annulaire (13).
